Europäisches Patentamt

European Patent Office

Office européen des brevets

(19)

(11) Veröffentlichungsnummer: **0 347 971**
**A1**

## (12) EUROPÄISCHE PATENTANMELDUNG

(21) Anmeldenummer: **89201502.5**

(22) Anmeldetag: **12.06.89**

(51) Int. Cl.⁴: **H01B 5/08 , H01B 11/22 , H02G 7/05**

(30) Priorität: **18.06.88 DE 3820730**

(43) Veröffentlichungstag der Anmeldung:
**27.12.89 Patentblatt 89/52**

(84) Benannte Vertragsstaaten:
**DE FR GB IT**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB IT**

(72) Erfinder: **Herff, Robert**
**Römerstrasse 30**
**D-5000 Köln 50(DE)**
Erfinder: **Jörres, Horst**
**Gneisenaustrasse 5**
**D-5160 Düren(DE)**
Erfinder: **Weidhaas, Wolfgang**
**Rambouxstrasse 88**
**D-5000 Köln 60(DE)**
Erfinder: **Pausch, Wolfgang, Dr.**
**Mittelbech 28**
**D-5061 Heiligenhaus(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Freileiter mit einer optischen Nachrichtenleitung.**

(57) Die Erfindung bezieht sich auf einen Freileiter mit einer optischen Nachrichtenleitung, welche aus einer von Verseilelementen des Freileiters umgebenen, querdruckempfindlichen rohrförmig geschlossenen Hülle mit darin radial beweglich und mit Überlänge geführten Lichtwellenleitern (LWL) besteht. Auf einfache Weise wird eine Beschädigung der LWL dadurch vermieden, daß die Hülle (1,5) von einem unmittelbar anliegenden metallischen Versteifungsgebilde (2,6,10,12,14,15) umgeben ist, welches derart verformungssteif bemessen ist, daß in radialer Richtung auf den Freileiter (19) durch Klemmarmaturen (20,21) ausgeübte Druckkräfte an der optischen Nachrichtenleitung derart vorbeigeleitet werden, daß nur eine geringfügige Verformung der Hülle (5) der optischen Nachrichtenleitung (3) verursacht wird.

Fig.1

## Freileiter mit einer optischen Nachrichtenleitung

Die Erfindung bezieht sich auf einen Freileiter mit einer optischen Nachrichtenleitung, welche aus einer von Verseilelementen des Freileiters umgebenen, querdruckempfindlichen rohrförmig geschlossenen Hülle mit darin radial beweglich und mit Überlänge geführten Lichtwellenleitern (LWL) besteht.

Ein derartiger Freileiter ist in "Elektrizitätswirtschaft" 87 (1988), Seiten 462 bis 466 beschrieben. Dort besteht die Hülle der LWL aus einem Edelstahlröhrchen, welches statt eines Stahldrahtes im Seilverbund des Freileiters angeordnet ist. Dabei ist es unbedingt erforderlich, um das Edelstahlröhrchen deformationsfrei zu führen, daß für die Anbringung von Klemmelementen wie Konusklemmen, Preßklemmen, außer Abspannspiralen zusätzlich Schutzspiralen vorgesehen werden. Eine die LWL schädigende Verformung der Hülle ist weiterhin durch nicht auszuschließende unsachgemäße Behandlung der Freileiter insbesondere bei Verlegungsarbeiten möglich.

Edelstahlröhrchen gewähren bei sorgsamer querdruckfreier Behandlung einen hervorragenden Schutz für die hermetisch eingeschlossenen LWL. Eine Verschweißung der Längsnaht eines aus einem Streifen gefalteten Stahlröhrchens ist aber nur dann mit ausreichender Qualität möglich, wenn kleine Wandstärken gewählt werden. Dann ergeben sich glatte Innenflächen ohne Schweißnahtrauhigkeit, durch welche die LWL beschädigt werden könnten. Für derartige Röhrchen sind aber keine zu engen Biegeradien zulässig, weil dann - ebenso wie bei zu starker Druckeinwirkung - bleibende Verformungen und Querschnittseinquetschungen entstehen, durch welche die LWL gefährdet sind.

Es ist auch bekannt (EP-A 01 55 184), den optischen Nachrichtenleiter in einer in sich stabilen Hohlkammer des Freileiters anzuordnen. Die Herstellung einer solchen Hohlkammer beispielsweise aus Profilelementen, welche ein Gewölbe um den optischen Nachrichtenleiter bilden, ist aufwendig. Die Profilelemente müssen mit enger Toleranz hergestellt und mit außergewöhnlicher Sorgfalt zu einem Gewölbe verseilt werden. Störungen beim Verseilvorgang können zu irreversibler Verquetschung der Hüllen und ungünstigenfalls zu einem Bruch eines der darin eingeschlossenen LWL führen.

Der Erfindung liegt die Aufgabe zugrunde, den Freileiter der eingangs genannten Art derart zu gestalten, daß bei geringem Herstellungsaufwand ohne außergewöhnliche Vorsichtsmaßnahmen eine Beschädigung der LWL vermieden wird.

Die Lösung gelingt dadurch, daß die Hülle von einem unmittelbar anliegenden metallischen Versteifungsgebilde umgeben ist, welches derart verformungssteif bemessen ist, daß in radialer Richtung auf den Freileiter durch Klemmarmaturen ausgeübte Druckkräfte an der optischen Nachrichtenleitung derart vorbeigeleitet werden, daß nur eine geringfügige Verformung der Hülle der optischen Nachrichtenleitung verursacht wird.

Erfindungsgemäß werden die Aufgaben der hermetischen Einkapselung der LWL und der Querdruckfestigkeit durch verschiedene Elemente erfüllt. Das Versteifungsgebilde kann ohne großen Aufwand einfach hergestellt werden, weil es weder gegen das Eindringen von Feuchtigkeit abgedichtet werden muß (vgl. DE-OS 36 24 267) noch in sich in Form einer Gewölbekammer stabil sein muß. Ein aufwendig in den Freileiter zu integrierender stabiler Hohlraum ist nicht erforderlich.

Gemäß einer vorteilhaften Ausführungsform ist vorgesehen, daß das Versteifungsgebilde ein wendelförmig mit eng benachbarten Windungen um die Hülle gewickelter Profildraht ist. Eine solche auf die querdruckempfindliche Hülse der LWL gewickelte Wendel ist genügend fest gegen bei der Herstellung des Freileiters und bei dessen Verlegung zu erwartende Querdruckbelastungen. Sie ist weiterhin sehr flexibel.

Wenn auf eine sehr hohe Flexibilität verzichtet werden kann, ist eine alternative Lösung vorteilhaft, welche dadurch gekennzeichnet ist, daß das Versteifungsgebilde ein mit offener stumpfer Längsnaht um die Hülle gebogener Metallstreifen ist. Das mit offener Naht die Hülle der LWL zusätzlich umgebende Metallrohr erfüllt gleichzeitig zugentlastende Aufgaben. Es kann derart bemessen werden, daß die optische Nachrichtenleitung ohne weitere Bewährungselemente als optisches Luftkabel freihängend zwischen Masten aufgehängt werden kann.

Gemäß einer besonders vorteilhaften Ausführungsform der Erfindung ist vorgesehen, daß die Hülle in einer zugentlastende Rundelemente enthaltenden Verseillage um einen zugentlastenden Kern verseilt ist und von einer gegensinnig verseilten Lage aus elektrisch gut leitfähigen Profilelementen umgeben ist, welche radial innen einen Flächenbereich aufweisen, welcher der Umfangskontur der die Hülle enthaltenden Verseillage angeglichen ist. Die umgebenden Profilelemente sind einander nach der Fertigstellung des Kabels mit geringem tangentialen Spiel benachbart. Sie brauchen dann nicht mit außergewöhnlicher Genauigkeit hergestellt werden und können ohne besondere Maßnahmen in üblicher Weise verseilt werden.

Bei von außen aufgebrachten radialen Druckkräften können die Profilelemente nur geringfügig radial nach innen bis zur Bildung eines festen Gewölbes verschoben werden. Die dabei möglichen geringfügigen - bei als Stahlröhrchen ausgebildeter Hülle elastischen - Verformungen der LWL-Hülle sind unschädlich.

Wegen der flachen Innenkontur der Profilelemente liegen sie großflächig an den in Gegenschlagrichtung darunter verseilten Drähten an und werden deshalb, auch wenn sie aus weichem Metall bestehen, nicht nennenswert verformt. Deren Material kann nicht unzulässig stark in den Bereich der optischen Nachrichtenleitung gequetscht werden.

Eine weitere vorteilhafte Ausführungsform der Erfindung ist dadurch gekennzeichnet, daß die Hülle in einer Verseillage zwischen zwei tangential benachbarten Stützelementen angeordnet ist, welche sich mit einem schmalen Fußbereich auf einem zentralen Zugentlastungselement abstützen und sich mit verbreiterten Bereichen bis zur Umfangslinie der Verseillage radial über die Hülle hinaus erstrecken. Dabei brauchen die Stützelemente nur radiale Kräfte abzufangen bzw. an der optischen Nachrichtenleitung vorbeizuleiten. Selbst bei starker Verquetschung einer umgebenden, aus weichen Aluminiumdrähten bestehenden Verseilschicht dringt deren Material nicht in den für die optische Nachrichtenleitung vorgesehenen Raum ein.

Wenn die Stützelemente und die optische Nachrichtenleitung in der äußersten Verseilschicht eines Freileiters angeordnet sind, ist es zur vollständigen Abdeckung der optischen Nachrichtenleitung nach außen hin vorteilhaft, daß die Stützelemente radial über der Hülle aneinander anliegen.

Wenn sehr starke Zugkräfte von einer Trag- und Abspannarmatur aufgebracht werden müssen, kann der dabei auf den Freileiter ausgeübte Reibschlußdruck gering gehalten werden, wenn folgende Merkmale vorgesehen sind (vgl. FR-PS 10 88 716):
- im Bereich einer Abspannklemme ist um den Freileiter eine Verformungssteife, sich zu ihren Enden ballig verjüngende zweiteilige Hülse gelegt
- auf einen Längenbereich des Freileiters ist eine aus gewendelten Drahtelementen bestehende, die Hülse umfassende Abspannspirale gewickelt
- das vom Aufhängepunkt abgewandte Ende der Abspannsirale ist mittels einer Schelle um den Freileiter gedrückt,
- die Abspannklemme ist im Bereich der Hülse auf die Abspannspirale geklemmt.

Die Erfindung und ihre Vorteile werden anhand der Beschreibung von in der Zeichnung dargestellten vorteilhaften Ausführungsbeispielen näher erläutert.

Fig. 1 zeigt einen mit einer Versteifungswendel versehenen Abschnitt einer optischen Nachrichtenleitung, teilweise geschnitten.

Fig. 2 zeigt einen Querschnitt durch eine Ausführungsform eines erfindungsgemäßen Freileiters mit einer von einem Verstärkungsrohr umfalteten optischen Nachrichtenleitung.

Fig. 3 zeigt eine Ausführungsform der Erfindung, bei welcher eine die optische Nachrichtenleitung enthaltende Verseillage von einer gegensinnig aufgeseilten Lage aus Profilelementen umgeben ist.

Fig. 4 zeigt eine alternative Ausführungsform, bei welcher die Profilelemente gegenüber Fig. 3 abgewandelt sind.

Fig. 5 zeigt eine weitere Ausführungsform der Erfindung, bei welcher die optische Nachrichtenleitung zwischen zwei Stützelementen gesichert ist.

Fig. 6 zeigt eine insbesondere für die Ausführungsformen nach den Figuren 3 und 4 bevorzugte Anbringung einer Trag- und Abspannarmatur.

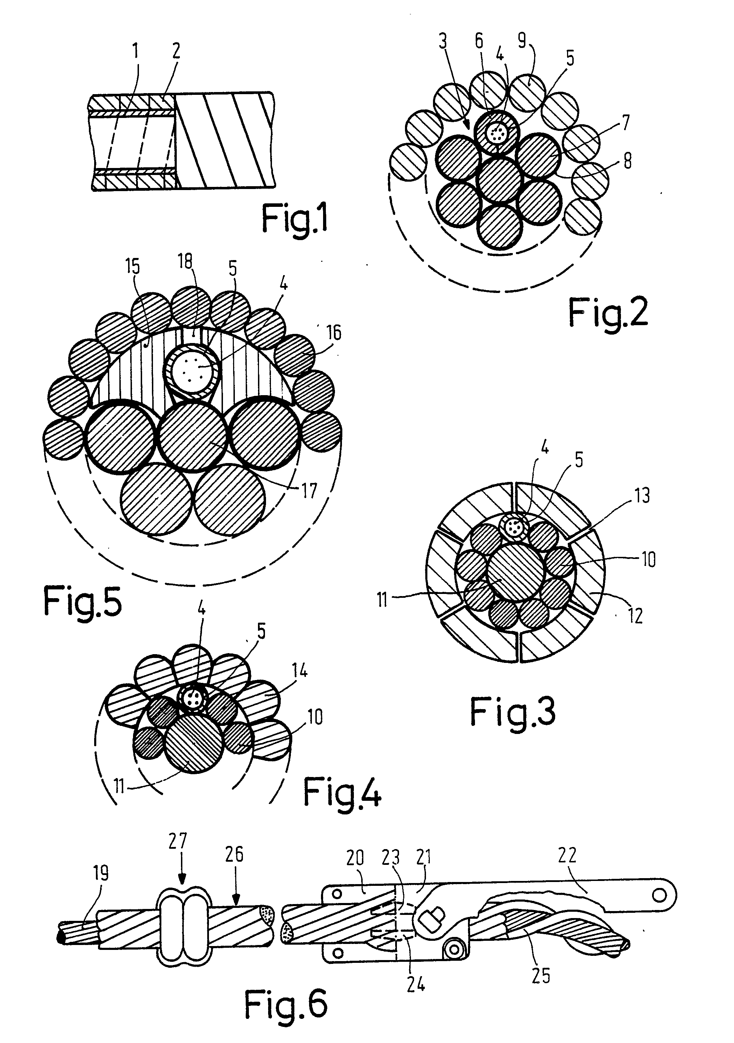

In Fig. 1 ist mit 1 eine dünnwandige Hülle (vorzugsweise Edelstahl) bezeichnet, in welcher nicht dargestellte LWL radial beweglich und mit Überlänge geführt sind. Die LWL können in einer die Hülle ausfüllenden Gelmasse eingebettet sein. Um die Hülle 1 ist zur Versteifung ein Rechteckdraht 2 gewendelt, dessen Windungen eng nebeneinander liegen. Die Aufwickelhöhe des Rechteckdrahtes 2 ist erheblich größer als die Wandstärke der Hülle 1. Bei entsprechend großer Schichtdicke kann der Rechteckdraht 2 aus einer nicht korrodierenden Aluminiumlegierung bestehen. Eine gemäß Fig. 1 aufgebaute optische Nachrichtenleitung kann in einen Freileiter analog Position 3 nach Fig. 2 eingeseilt werden.

In Fig. 2 ist jedoch eine die LWL 4 umgebende dünnwandige Hülle 5 (0,15 mm Wandstärke), welche durch Laserschweiße der Naht eines rohrförmig um die LWL 4 gefalteten aus Edelstahl bestehenden Blechstreifens gebildet ist, von einem versteifenden dickwandigen Metallrohr 6 umgeben, dessen Faltnaht offen bleiben darf und deshalb keinen hohen Herstellungsaufwand erfordert. Die optische Nachrichtenleitung 3 ist gemeinsam mit durchmessergleichen zugfesten Drahtelementen 7 verseilt, welche mit einer die Korrosion verhindernden Aluminiumschicht 8 versehen sind. Um das die optische Nachrichtenleitung 3 enthaltende Verseilbündel sind aus elektrisch gut leitfähigem Weichmetall, insbesondere Aluminium bestehende Leiterelemente 9 verseilt.

In Fig. 3 ist die dünnwandige Hülle 5 der LWL 4 unmittelbar mit den Freileiterdrähten 10 um einen zugfesten Kern 11 verseilt.

Die darüber verseilte Schicht wird von Profilelementen 12 gebildet, welche nicht gewölbebildend aneinanderliegen, sondern durch einen (übertrieben gezeichneten) tangentialen Spalt 13 getrennt sind. Diese Profilelemente 12 dürfen relativ hohe Abmessungstoleranzen aufweisen und sind, da sie aus weichem elektrisch leitfähigem Metall bestehen, einfach durch einen Ziehvorgang herstellbar. Bei sehr hohen von außen einwirkenden Quetschkräften werden die Spalte 13 geschlossen, so daß dann die Profilelemente ein Gewölbe bilden. Dadurch kann aber die Hülle 4 nur unwesentlich verformt werden, weil ein Weiterbewegen der Profilelemente 12 zum Kern 11 bei Gewölbebildung verhindert ist. Die an der darunterliegenden Verseilschicht anliegenden angepaßten flachen Konturen der Profilelemente 12 verhindern ein zu starkes Eindringen der Freileiterdrähte 10 in die Profilelemente 12.

Bei der Ausführungsform nach Fig. 4 sind gegenüber der Fig. 3 lediglich die Profilelemente 12 durch abgewandelte, aber im wesentlichen gleichwirkende Profilelemente 14 ersetzt, welche durch Verformung von Runddrähten hergestellt wurden.

Bei der Ausführungsform nach Fig. 5 leiten parallel neben der dünnwandigen Hülle 5 geführte Stützelemente 15 den über die Freileiterdrähte 16 einwirkenden radial nach innen gerichteten Quetschdruck an der Hülle 5 vorbei direkt auf das zugfeste Zentralelement 17. Falls die Hülle 5 und die Stützelemente 15 in der äußersten Verseilschicht eines Freileiters liegen, sollte der Spalt 18 geschlossen sein, so daß dort die Profilelemente 15 aneinanderliegen.

In Fig. 6 ist ein Freileiter 19 mit einem Querschnittsaufbau nach den Figuren 3 oder 4 von einer Zug- und Abspannarmatur gehalten, welche aus aneinander geschraubten Klemmbacken 20 und 21 und einer damit gelenkig verbundenen Befestigungsgabel 22 besteht. Im Bereich der Klemmbacken 20 und 21 sind verformungssteife ballige Halbschalen 23 und 24 (gestrichelt gezeichnet) um die optische Nachrichtenleitung 19 gelegt und verhindern dort die Weiterleitung der Quetschkräfte in die Nachrichtenleitung 19. Über die Halbschalen 23 und 24 sowie über einen größeren Längenbereich der optischen Nachrichtenleitung 19 ist eine aus zugfesten Drahtelementen 25 bestehende Abspannspirale 26 gewendelt, welche zwischen den Halbschalen 23 und 24 und den Klemmbacken 20 und 21 reibschlüssig zugfest mit der Befestigungsgabel 22 verbunden ist. Bei Einwirkung einer Zugkraft über die Befestigungsgabel 22 werden die Drahtelemente 25 im Bereich zwischen den Halbschalen 23 und 24 einerseits und der Anpreßklemme 27 andererseits an den Umfang der optischen Nachrichtenleitung 19 gedrückt. Dadurch wird ein Reibschluß bewirkt, welcher durch die über die Befestigungsgabel 22 aufgebrachten Zugkräfte nicht überwunden werden kann. Der zur Bildung eines ausreichenden Reibschlusses erforderliche Quetschdruck ist auf einen großen Längenbereich verteilt und deshalb niedrig.

Durch eine Anpreßklemme 27 wird ein Aufweiten des Endbereiches der Haltespirale 26 und ein Anfangsrutschen verhindert. Der Anpreßdruck der Anpreßklemme 27 braucht nur gering zu sein und kann nicht zu einer Beschädigung erfindungsgemäß gestalteter Freileitungen führen.

**Ansprüche**

1. Freileiter mit einer optischen Nachrichtenleitung, welche aus einer von Verseilelementen des Freileiters umgebenen, querdruckempfindlichen rohrförmig geschlossenen Hülle mit darin radial beweglich und mit Überlänge geführten Lichtwellenleitern (LWL) besteht, dadurch gekennzeichnet, daß die Hülle (1,5) von einem unmittelbar anliegenden metallischen Versteifungsgebilde (2,6,10,12,14,15) umgeben ist, welches derart verformungssteif bemessen ist, daß in radialer Richtung auf den Freileiter (19) durch Klemmarmaturen (20,21) ausgeübte Druckkräfte an der optischen Nachrichtenleitung derart vorbeigeleitet werden, daß nur eine geringfügige Verformung der Hülle (5) der optischen Nachrichtenleitung (3) verursacht wird.

2. Freileiter nach Anspruch 1, dadurch gekennzeichnet, daß das Versteifungsgebilde ein wendelförmig mit eng benachbarten Windungen um die Hülle (5) gewickelter Profildraht (2) ist.

3. Freileiter nach Anspruch 1, dadurch gekennzeichnet, daß das Versteifungsgebilde ein mit offener stumpfer Längsnaht um die Hülle gebogener Metallstreifen (6) ist.

4. Freileiter nach Anspruch 1, dadurch gekennzeichnet, daß die Hülle (4) in einer zugentlastende Rundelemente (10) enthaltenden Verseillage um einen zugentlastenden Kern (11) verseilt ist und von einer gegensinnig verseilten Lage aus elektrisch gut leitfähigen Profilelementen (12,14) umgeben ist, welche radial innen einen Flächenbereich aufweisen, welcher der Umfangskontur der die Hülle (4) enthaltenen Verseillage angeglichen ist.

5. Freileiter nach Anspruch 1, dadurch gekennzeichnet, daß die Hülle (4) in einer Verseillage zwischen zwei tangential benachbarten Stützelementen (15) angeordnet ist, welche sich mit einem schmalen Fußbereich auf einem zentralen Zugentlastungselement (17) abstützen und sich mit verbreiterten Bereichen bis zur Umfangslinie der Verseillage radial über die Hülle (4) hinaus erstrecken.

6. Freileiter nach Anspruch 5,
dadurch gekennzeichnet, daß die Hülle (4) in der äußersten Verseillage des Freileiters angeordnet ist, und daß die Stützelemente (15) radial über der Hülle (4) aneinander anliegen.

7. Freileiter nach einem der Ansprüche 1 bis 6, dadurch gekennzeichnet, daß der Freileiter 19 mittels einer Trag- und Abspannarmatur (20,21,22) gemäß folgenden Merkmalen aufgehängt ist:
- im Bereich einer Abspannklemme (20,21) ist um den Freileiter (19) eine Verformungssteife, sich zu ihren Enden ballig verjüngende zweiteilige Hülse (21,24) gelegt
- auf einen Längenbereich des Freileiters (19) ist eine aus gewendelten Drahtelementen (25) bestehende, die Hülse (23,24) umfassende Abspannspirale (26) gewickelt
- das vom Aufhängepunkt abgewandte Ende der Abspannspirale (26) ist mittels einer Schelle (27) um den Freileiter (19) gedrückt,
- die Abspannklemme (20,21) ist im Bereich der Hülse (23,24) auf die Abspannspirale geklemmt.

8. Freileiter nach einem der Ansprüche 1 bis 7, dadurch gekennzeichnet, daß die Hülle (4) der optischen Nachrichtenleitung (3) aus Metall, insbesondere aus rostfreiem Edelstahl besteht und eine Wandstärke von weniger als 0,35 mm aufweist.

Fig.1

Fig.2

Fig.5

Fig.3

Fig.4

Fig.6

PHD 88-120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US - A - 4 699 461 (TAYLOR et al.) <br> * Ansprüche 1,8; Fig. 1,5,7 samt Text * | 1,3,5 | H 01 B 5/08 <br> H 01 B 11/22 <br> H 02 G 7/05 |
| X | GB - A - 2 125 984 (B.I.C.C.) <br> * Ansprüche 1,2,11; Fig. 3 samt Text * | 1,2 | |
| X | US - A - 4 359 598 (DEY et al.) <br> * Fig. 1,3,7 samt Text * | 1,4,5 | |
| X,P | EP - A2 - 0 286 804 (FELTEN) <br> * Ansprüche 1,5; Fig. samt Text * | 1,8 | |

RECHERCHIERTE SACHGEBIETE (Int. Cl.4)

H 01 B
G 02 B 6/00
H 02 G 7/00

Der vorliegende Recherchenbericht wurde für alle Patentansprüche erstellt.

| Recherchenort <br> WIEN | Abschlußdatum der Recherche <br> 14-08-1989 | Prüfer <br> KUTZELNIGG |
|---|---|---|